# EUROPEAN PATENT APPLICATION

(11) **EP 2 453 617 A1**
(43) Date of publication of application: **16.05.2012**
(21) Application number: 10797197.0
(22) Date of filing: 09.07.2010
(51) Int. Cl.: H04L 12/66, G06F 13/00, H04L 12/56, H04M 11/00

(54) **DELIVERING SYSTEM, METHOD, GATEWAY APPARATUS AND PROGRAM**

(30) Priority: 10.07.2009 JP 2009163746
(71) Applicant: NEC Corporation, Tokyo 108-8001 (JP)
(72) Inventor: OZAWA, Kazunori, Tokyo 108-8001 (JP)
(74) Representative: Glawe, Delfs, Moll
(86) International application number: PCT/JP2010/061671
(87) International publication number: WO 2011/004886

(57) **Abstract**

Provided are a delivery system, a program, a gateway, and a method in which content is subjected to conversion suited to the type of a terminal and are sent to the terminal via a network so that the terminal can decode and reproduce the content. Since preparatory work for converting/processing content for each terminal is unnecessary, delivery can be made more efficiently in a large-scale delivery and the like. When receiving a request from a terminal 170, a gateway 110 acquires model information of the terminal and information on content to be delivered and uses the acquired model information and content information to check whether or not a file or stream that has already been subjected to conversion corresponding to the terminal is stored in a storage apparatus 125. If the converted file or stream is stored, the gateway copies at least part of the converted file or stream and sends the file or stream to the terminal via the network. If the converted file or stream is not stored, the gateway requests a delivery server to send a file or stream of the content based on the information on the content, executes conversion suited to capability of the terminal on the file or stream based on the model information of the terminal, and sends the file or stream to the terminal.

## Description

### TECHNICAL FIELD

### [REFERENCE TO RELATED APPLICATION]

The present invention is based upon and claims, the benefit of the priority of Japanese patent application No. 2009-163746, filed on July 10, 2009, the disclosure of which is incorporated herein in its entirety by reference thereto.
The present invention relates to a delivery system. In particular, it relates to a delivery system and method, a gateway device, and a program delivering content including moving images, still image, and audio to various types of terminals via a network.

### BACKGROUND ART

Along with a fixed network being changed into broadband or NGN (Next Generation network) and with an increase in speed and capacity of a mobile network, content delivery is spreading. In such content delivery, content including video (still image, moving image, etc.) and audio are delivered to a household set-top box or a television (TVs) via the network. In addition, by utilizing advantage of NGN network, services such as IPTV (Internet Protocol Television) are starting to appear.

In addition, a further increase in speed and capacity of mobile network is expected through LTE (Long Term Evolution) and EPC (Evolved Packet Core) techniques, for example.

According to Patent Document 1, when a client acquires data from a server via a gateway, if the data exceeds a memory storage capacity of the client, the client stores the data in a client data storage device connected to the gateway or in a predetermined server on an Internet communication network. The client reacquires data from the storage device or server. The gateway downloads client-specified URL or URL file uniquely determined based on past history or the like in advance, and the gateway provides these URLs or URL files when requested by a client.

Patent Document 2 discloses a configuration in which a user uses an audio-visual terminal to watch/listen delivery content of a delivery server connected to a network. An AV gateway device notifies the audio-visual terminal of the delivery content in the delivery content as content of the AV gateway device. When the audio-visual terminal requests the AV gateway device to acquire delivery content, the AV gateway device acquires delivery content matching the request from the audio-visual terminal, converts the audio-visual content into data format receivable by the audio-visual terminal, and sends the content to the audio-visual terminal.

Patent Document 3 discloses a configuration in which a gateway server temporarily stores image data received from an electronic camera or an image server in the gateway server, and as needed, sends the stored image data to the electronic camera or the image server.

Patent Document 4 discloses an information delivery system including: a gateway server acquiring information via a backbone network of a connection destination; and an information display terminal that is connected to the gateway server and that displays information acquired from the server.

Patent Document 5 discloses a system for mobile terminals. Based on this system, when a mobile terminal (UE) acquires contents, a profile part of an information management server (R2M) creates profile information about the mobile terminal, the information comprising user agent information, user information, self-care information, and mobile terminal information (UE-Profile). The profile information is supplied from the profile part to an application gateway (JSP), The application gateway (JSP) refers to parameters in the profile information that represent the performance and capabilities of the mobile terminal and converts the content acquired from an origin server in response to a content request (HTTP Req) sent from the mobile terminal so that the performance and capabilities of the mobile terminal can be fully exploited. Namely, when receiving a request for content from mobile terminal information, the application gateway (JSP) acquires mobile terminal information from the information management server (R2M) and converts content from the origin server so that the content match the mobile terminal information.

Patent Document 6 discloses a home gateway apparatus connected to an out-of-home apparatus and an external gateway apparatus via a network. According to this document, the home gateway apparatus includes: a storage unit shat holds information about a predetermined apparatus; and an access control unit that controls access to the out-of-home apparatus. The access control unit acquires information on the predetermined apparatus from the storage unit and sends the information to the external gateway apparatus. If the external gateway apparatus determines that information about the out-of-home apparatus acquired from the out-of-home apparatus matches the information about the predetermined apparatus, the access control unit controls communication with the out-of-home apparatus without communication via the external gateway apparatus. Namely, Patent Document 6 discloses a home gateway apparatus using an out-of-home apparatus to control an indoor apparatus connected to a home network, aiming to realize communication in which server load is reduced, security is increased, and more types of out-of-home apparatuses are supported.

### RELATED DOCUMENTS

### PATENT DOCUMENTS

Patent Document 1: Japanese Patent Kokai Publication No. JP2001-084220A
Patent Document 2: Japanese Patent Kokai Publication No. JP2003-271487A
Patent Document 3: Japanese Patent Kokai Publication No JP2003-345701
Patent Document 4: Japanese Patent Kokai Publication No. JP2004-362317
Patent Document 5: Japanese Patent Kokai Publication No. JP2005-275534
Patent Document 6: Japanese Patent Okapi Publication No. JP2007-312148A

### SUMMARY OF THE INVENTION

### PROBLEMS TO BE SOLVED BY THE INVENTION

The entire disclosures of the above Patent Documents 1 to 6 are incorporated herein by reference thereto, Next, related techniques are analyzed in view of the present invention.

In conventional services, TV content can be delivered only to a household set-top box, TV or DVD (Digital Versatile Disks) recorder, and the like connected to the set-top box. Various types of terminals (for example, mobile phone, PC, game machine, digital photo frame and so forth) that are not connected to the household set-top box cannot receive the content. Especially, it is impossible for a mobile terminal such as a mobile phone to establish connection outside home and to receive content delivery.

In addition, when various types of terminals, mobile phones, or the like receive, decode, and display video/audio content, if encoded information created when content is encoded does not match capability information of the terminal, it is difficult for the terminal to decode a moving image stream. As a result, a moving image may not be displayed or may be distorted. Further, if bit rate, resolution, codec, file format, protocol, or the like does not match, decoding cannot be executed on the terminal side.

Conventionally, it is necessary to convert/process content for each terminal in advance, to create content suited to each terminal. These operations are needed and more work is required with an increase in the number of contents and terminal models, counted as a problem.

Further, if the number of terminals for is large, an efficient delivery method requiring reduced workload on the network side is necessary.

None of the above Patent Documents 1 to 6 discloses a configuration to solve the above problems.

It is an object of the present invention to provide a delivery system, a program, a gateway apparatus, and a method in which content is subjected to conversion corresponding to a model of a terminal and sent to the terminal via a network so that the terminal can decode and reproduce the content and in which since preparatory work for converting/processing content for each terminal is unnecessary, delivery can be made more efficiently in a large-scale delivery and the like.

### MEANS TO SOLVE THE PROBLEMS

According to the present invention, there is provided a delivery system, comprising: a gateway, wherein the gateway acquires, from a terminal via a network, model information of the terminal and information on content to be delivered to the terminal,
the gateway uses the acquired model information and the information on the content to check whether or not a file or stream that corresponds to the content and that has already been subjected to conversion corresponding to the terminal is stored in a storage apparatus_{;}
in case it is found that the converted file or stream is stored in the storage apparatus, the gateway copies at least part of the converted file or stream and sends the at least part of the converted file or stream copied to the terminal via the network, and
in case it is found that the converted file or stream is not stored in the storage apparatus, the gateway requests a delivery server to send a file or stream of the content based on the information on the content, executes conversion corresponding to the terminal on the file or stream of the content acquired from the delivery server, based on the model information of the terminal, stores the converted file or stream in the storage apparatus, and sends the file or stream to the terminal via the network.

According to the present invention, there is provided a delivery method, by a gateway, comprising:
acquiring, from a terminal via a network, model information of the terminal and information on content to be delivered to the terminal;
using the acquired model information and the information on the content to check whether or not a file or stream that corresponds to the content and that has already been subjected to conversion corresponding to the terminal is stored in a storage apparatus;
copying, if it is found that the converted file or stream is stored in the storage apparatus, at least part of the converted file or stream and sending the file or stream to the terminal via the network; and
requesting, if it is found that the converted file or stream is not stored in the storage apparatus, a delivery server to send a file or stream of the content based on the information on the content, executing conversion corresponding to the terminal on the file or stream of the content acquired from the delivery server based on the model information of the terminal, storing the converted file or stream in the storage apparatus, and sending the file or stream to the terminal
via the network..

According to the present invention, there is provided a gateway apparatus, comprising: a conversion unit, wherein the conversion unit acquires, from a terminal via a network, model information about the terminal and information on content to be delivered to the terminal;
the conversion unit uses the acquired model information and the information on the content to check whether or not a file or stream that corresponds to the content and that has already been subjected to conversion corresponding to the terminal is stored in a storage apparatus;
if the converted file or stream is stored in the storage apparatus, the conversion unit copies at least part of the converted file or stream and sends the file or stream to the terminal via the network; and
if the converted file or stream is not stored in the storage apparatus, the conversion unit requests a delivery server to send a file or stream of the content based on the information on the content, executes conversion corresponding to the terminal on the file or stream of the content acquired from the delivery server based on the model information about the terminal, stores the converted file or stream in the storage apparatus, and sends the file or stream to the terminal via the network.

According to the present invention, there is provided a program, causing a computer forming a gateway to execute the processing comprising:
acquiring, from a terminal via a network, at least model information about the terminal or information on content to be delivered to the terminal;
using the acquired model information and the information on the content to check whether or not a file or stream that corresponds to the content and that has already been subjected to conversion corresponding to the terminal is stored in a storage apparatus;
copping, if it is found that the converted file or stream is stored in the storage apparatus, at least part of the converted file or stream and sending the file or stream to the terminal via the network; and
requesting, if it is found that the converted file or stream is not stored in the storage apparatus, a delivery server to send a file or stream of the content based on the information on the content, executing conversion corresponding to the terminal on the file or stream of the content acquired from the delivery server based on the model information about the terminal, accumulating the converted file or stream in the storage apparatus, and sending the file or stream to the terminal via the network. According to the present invention, there is also provided a computer-readable recording medium in which the program is recorded.

### MERITORIOUS EFFECTS OF THE INVENTION

According to the present invention, content is subjected to conversion corresponding to the type of a terminal and are sent to she mobile terminal via a network so that the terminal can decode and reproduce the contents. In addition; since preparatory work for converting/processing content for each terminal is unnecessary, efficient delivery can be made in a large-scale delivery including many requesting terminals.

### BRIEF DESCRIPTION OF THE DRAWING

Fig. 1 is a diagram showing a connection configuration of a first exemplary embodiment of the present invention.
Fig, 2 is a diagram, showing a configuration of a gateway 110 according to the first exemplary embodiment of the present invention.
Fig. 3 is a diagram showing a connection configuration of a second exemplary embodiment of the present invention.
Fig. 4 is a diagram showing a connection configuration of a third exemplary embodiment of the present invention.
Fig. 5 is a diagram showing an example in which an LTE/EPC network is used as a mobile network according to the third exemplary embodiment of the present invention.

### MODES FOR CARRYING OUT THE INVENTION

The present invention is suitably applicable to a delivery system that delivers content including a moving image, a still image, or audio to various types of terminals (for example, mobile phones, PCs, game machines, and the like) via a network (for example, an IP network, a broadband network, an NGN, an Internet network, a mobile network, or the like). According to the present invention, before sent to a terminal (for example, a mobile phone, a PC, a game machine, a digital photo frame, or the like) via a network (for example, a mobile network, an Internet network, or the like), content the same as that delivered, for example, to a household set-top box or to a TV or a DVD recorder connected to the set-top box via a network (for example, an IP network, a broadband network, an NGN, or the like) are automatically subjected to conversion suited to the model of the terminal. In this way, there is no need to remodel the terminal to decode and reproduce the contents.

In addition, according to the present invention, there is provided a delivery system that does not require preparatory work for converting/processing content for each terminal and that enables efficient delivery with reduced workload on the network side even in a large-scale delivery with an enormous number of requesting terminals.

According to the present invention, when a gateway receives a predetermined request (for example, a connection request) from a terminal via a network, the gateway acquires model information about the terminal and information on content to be delivered. The gateway next uses the model information and the information on the content to check whether or not a file or stream that corresponds to the content and that has already been subjected to conversion, corresponding to the model of the terminal in a storage apparatus including a memory (for example, a cache memory) or a storage apparatus (for example, a hard disk apparatus). If the converted file or stream is stored in the storage apparatus, the gateway copies at least part of the converted file or stream and sends the file or stream to the terminal requesting the content via the network.

According to the present invention, if a file or stream that corresponds to the content and that has already been subjected to conversion corresponding to the model of the terminal is not stored either in the memory or the storage apparatus as a storage unit, the gateway requests and acquires a file or stream that corresponds to the content from a delivery server, based on the information on the content. Next, the gateway determines whether the file or stream that corresponds to the content from the delivery server needs to be subjected to conversion corresponding to capability of the terminal, based on the content capability information and the terminal model information (information about capabilities corresponding to the type). If the gateway determines that the conversion is necessary, the gateway converts the file or stream, stores the converted file or stream in the storage apparatus, and sends the converted file or stream to the terminal requesting the content via the network.

According to the present invention, there is provided a delivery system including the mobile phone, personal computer, game machine, digital photo frame, and the like.

In addition, according to the present invention, there is provided a delivery system including an IP network, a broadband network, an NGN network, an Internet network, a W-LAN (Wireless LAN), a mobile packet network, a WiMax (Worldwide Interoperability for Microwave Access) network, an LTE network, and the like.

Next, exemplary embodiments of the present invention will be described. While a moving image is used as content in the following exemplary embodiments, the same arrangement can be used when still image, audio, and voice are used as content.

### <Exemplary Embodiment 1>

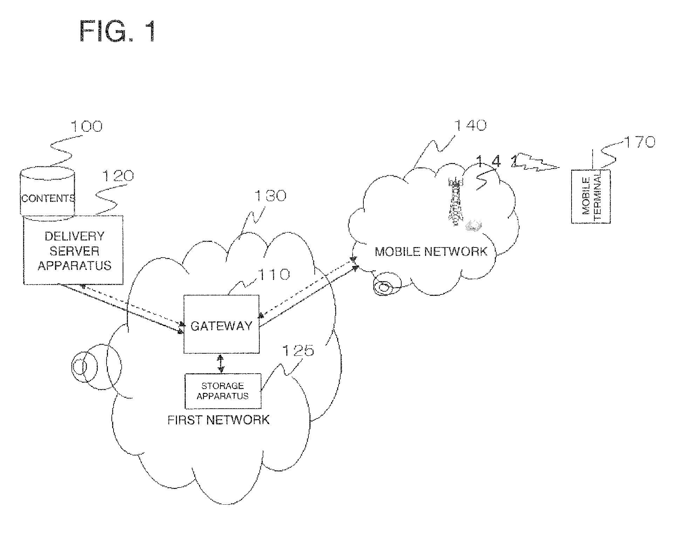

Fig. 1 illustrates a configuration of a first exemplary embodiment of the present invention. In Fig. 1, a delivery server apparatus 120 stores compression-encoded bit streams or files of content including at least one of moving image, still image, audio, and voice as content 100 in advance.

A first network 130 may be any network, such as an IP network, a broadband network, an NGN (Next Generation Network), or an Internet network. A second network 140 is a mobile packet network.

A gateway 110 is arranged on the first network 130.

When receiving a connection request from a mobile terminal 170 via the second network 140, the gateway 110 acquires mobile terminal model information included in a connection request protocol. In the present exemplary embodiment, HTTP (Hyper Text Transfer Protocol) is used as the connection request protocol. However, SIP (Session Initiation Protocol) or the like may be used, instead.

After acquiring model information of the mobile terminal 170, the gateway 110 acquires information on content (content to be delivered) requested by the mobile terminal 170.

Next, the gateway 110 searches a storage apparatus 125 for a file or stream that corresponds to the content which is to be delivered to the mobile terminal 170 and that has already been subjected to conversion corresponding to the model of the mobile terminal 170.

As a result of this search, if the gateway 110 determines that a file or stream that corresponds to the content to be delivered to the mobile terminal 170 and that has already been subjected to conversion corresponding to the model of the mobile terminal 170 is stored in the storage apparatus 125, the gateway 110 copies at least part of the converted file or stream and sends the file or stream to the mobile terminal 170.

If the gateway 110 determines that a file or stream that corresponds to the content to be delivered to the mobile terminal 170 and that has already been subjected to conversion corresponding to the model of the mobile terminal 170 is not stored in the storage apparatus 125, the gateway 110 sends a request to the delivery server apparatus 120 and reads the content to be delivered from the delivery server apparatus 120. Next, the gateway 110 executes conversion so that the content matches the model information of the mobile terminal 170. Next, the gateway 110 stores the converted file or stream in the storage apparatus 125 and sends the converted file or stream to the mobile terminal 170 via the network.

Instead of the storage apparatus 125, a cache memory may be included in the gateway 110.S

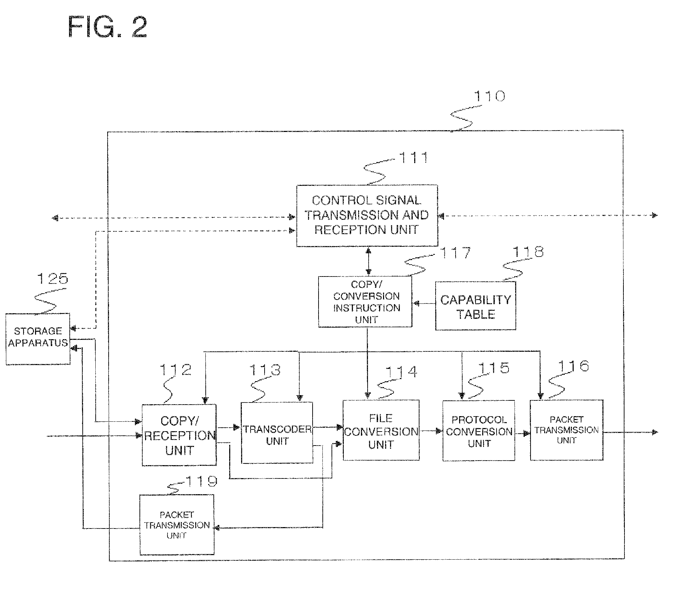

Fig. 2 illustrates a configuration of the gateway 110. Referring to Fig. 2, the gateway 110 includes a control signal transmission and reception unit 111, a packet copy/reception unit 112, a transcoder unit 113, a file conversion unit 114, a protocol conversion unit 115, a packet transmission unit 116, a copy/conversion instruction unit 117, and a capability table 118.

The control signal transmission and reception unit 111 receives a request signal of a certain protocol from the mobile terminal 170. In this exemplary embodiment, HTTP is used as the protocol from the mobile terminal 170. Terminal model information is described in the HTTP User Agent header. The control signal transmission and reception unit 111 receives at least one of the terminal model information, network information used for connection (for example, a network type, a band, etc.), and the like and outputs the received information to the copy/conversion instruction unit 117. Other than HTTP, a known protocol such as SDP (Session Description Protocol) can be used.

Capability information corresponding to a terminal model is stored in advance in the capability table 118. Examples of the capability information include:
- allowable codec;
- screen resolution;
- frame rate;
- file format and file size receivable by the terminal; and
- reception protocol of the terminal.

Based on terminal model information, the copy/conversion instruction unit 117 reads corresponding capability information from the capability table 118 and outputs the information to each processing unit.

Next, when a connection request is accepted, the mobile terminal 170 selects desirable video content and uses the above protocol to send information on the content to the gateway 110.

In the gateway 110, based on the information on the content and model information, the control signal transmission and reception unit 111 accesses and searches the storage apparatus 125 for a file or stream that corresponds to the same content and that has already been subjected to conversion corresponding to the same type. In this exemplary embodiment, either a hard disk apparatus or a memory apparatus (a semiconductor memory, etc.) can be used as the storage apparatus 125.

If a file or stream that corresponds to the content to be delivered and that has already been subjected to conversion corresponding to the model of the mobile terminal 170 is stored in the storage apparatus 125, the gateway 110 does not execute conversion.

The control signal transmission and reception unit 111 instructs the copy/conversion instruction unit 117 to copy the contents, instructs the storage apparatus 125 to read the file or stream that corresponds to the content and that has already been subjected to conversion corresponding to the type (the type identical to that of the mobile terminal 170), and instructs the transcoder unit 113 to bypass processing thereof.

Upon receiving copying instructions from the copy/conversion instruction unit 117, the copy/reception unit 112 extracts a stream part from the file or stream read from the storage apparatus 125 and copies the stream part. Next, the copy/reception unit 112 outputs the stream part to the file conversion unit 114, while bypassing the transcoder unit 113.

The file conversion unit 114 receives capability information corresponding to the model of the mobile terminal 170 from the copy/conversion instruction unit 117 and uses the stream sent from the copy/reception unit 112 to create a file format receivable by the model of the mobile terminal 170. Examples of the file format include: 3GPP file format, MP4 file format, and flash file. In this example, 3GPP file format is used. Details of the 3GPP file format can be found in 3 GPP TS26.244 standards.

The protocol conversion unit 115 receives capability information of the mobile terminal 170 from the copy/conversion instruction unit 117 and creates a protocol receivable by the mobile terminal 170, including RTP (Real-time Transport Protocol)/UDP (User Datagram Protocol) to HTTP (Hypertext Transfer Protocol)/TCP (Transmission Control Protocol), for example. In this exemplary embodiment, HTTP/TCP/IP is used.

The packet transmission unit 116 adds an appropriate header to a packet for the protocol sent from the protocol conversion unit 115 and sends the packet to the network.

On the other hand, if a file or stream that corresponds to the content to be delivered and that has already been subjected to conversion corresponding to the model of the mobile terminal 170 is not stored in the storage apparatus 125, the gateway 110 executes conversion and stores the converted stream, the model information, and the information on the content in the storage apparatus 125.

First, the control signal transmission and reception unit 111 of the gateway 110 converts the HTTP protocol from the mobile terminal 170 into SIP (Session Initiation Protocol), RTSP (Real Time Streaming Protocol), or the like. Next, the converted protocol is sent to the delivery server apparatus 120.

In Fig. 1, the delivery server apparatus 120 reads a compression-encoded stream or file corresponding to the selected content from the content 100 and sends the read stream or file to the gateway 110 by using an RTP (Real-time Transport Protocol) packet, for example.

In addition, the delivery server apparatus 120 sends capability information corresponding to the selected content to the gateway 110 by using a protocol such as SDP (Session Description Protocol).

Referring back to Fig. 2, the control signal transmission and reception unit 111 receives SDP or the like from the delivery server apparatus 120, extracts capability information about the selected content (for example, information about a codec, a video screen resolution, a bit rate, a frame rate, and a stream or a file used when the content is compression-encoded), and outputs the information to the copy/conversion instruction unit 117.

The copy/conversion instruction unit 117 receives the model information, which has sent from the mobile terminal 170, and the capability information on the content, which has sent from the delivery server apparatus 120, from the control signal transmission and reception unit 111, The copy/conversion instruction unit 117 determines whether or not the video content sent from the delivery server apparatus 120 needs to be converted. If conversion is needed, the copy/conversion instruction unit 117 determines what conversion needs to be executed by the transcoder unit 113. For example, from the information on the content, the copy/conversion instruction unit 117 recognizes that the video content is MPEG-2 MP (Main Profile) compression-encoded at 8 Mbps, at a screen resolution of SD (720 x 480 pixels), and at a frame rate of 30 fps. In addition, from the model information, the copy/conversion instruction unit 117 recognizes that the mobile terminal 170 is a new type of mobile phone.

For example, capability information about a terminal is stored in advance in the capability table 118, in association with model information. Examples of the capability information include:
an allowable codec;
a screen resolution;
a frame rate;
a file format and file size receivable by the terminal; and
a reception protocol of the terminal.

The copy/conversion instruction unit 117 reads capability information corresponding to model information from the capability table 118.

According to the present exemplary embodiment, since the terminal model indicates a new terminal, the capability information read from the capability table 118 represents: H.264 encoding; 512 kbps (kilobit/second); QVGA (320 x 240 pixels) screen resolution; and 30 fps (frame/second) frame rate.

The copy/conversion instruction unit 117 creates conversion information for conversion between the content information and the terminal capability information (for example, the conversion information, represents decoding based on MPEG-2 MP, conversion of the screen resolution from SD to QVGA, encoding based on H.264 512 kbps and 30 fps, and the like) and outputs the conversion information to the transcoder unit 113 and the like. In addition, the copy/conversion instruction unit 117 outputs the capability information which has been read to the packet transmission unit 119, the file conversion unit 114, the protocol conversion unit 115, and the packet transmission unit 116.

The copy/reception unit 112 receives the file or stream of the selected video content from the delivery server apparatus 120. When the copy/reception unit 112 receives the file, the copy/reception unit 112 extracts and outputs a stream stored in the file. When the copy/reception unit 112 receives the stream, the copy/reception unit 112 extracts and outputs a stream stored in the packet payload,

The transcoder unit 113 receives the stream extracted by the copy/reception unit 112 and receives the above conversion information (for example, the conversion information, represents decoding based on MPEG-2 MP, conversion of the screen resolution from. SD to QVGA, encoding based on H.264 512 kbps and 30 fps, and the like) from the copy/conversion instruction unit 117. Next, in accordance with the information, the transcoder unit 113 activates a transcoder that operates on a real-time basis, converts the stream (decodes the received stream based on MPEG-2 MP, converts the screen resolution from SD to QVGA, encodes the stream based on H.264 512 kbps and 30 fps, for example), and outputs the converted stream to the packet transmission unit 119 and the file conversion unit 114.

The packet transmission unit 119 receives the content information and the terminal model information from the copy/conversion instruction unit 117, receives the converted stream from the transcoder unit 113, and outputs the received information, and stream to the storage apparatus 125 in the form of packets.

The storage apparatus 125 stores these items of information and the converted stream.

The file conversion unit 114 receives the capability information of the mobile terminal 170 from the copy/conversion instruction unit 117, receives the converted stream from the transcoder unit 113, and converts the stream into file format suitably transmitted to the mobile terminal 170, in accordance with the capability information.

Examples of the file format include 3GPP, 3GPP2, and MP4. Acceptable file formats vary depending on the model of the mobile terminal 170. Thus, the file conversion unit 114 determines a usable file format in accordance with the capability information and creates a file in accordance with the determined file format. Next, the file conversion unit 114 stores the converted stream in the file and outputs the file to the protocol conversion unit 115. For example, details of the 3GPP file format can be found in 3GPP TS26.244 standards.

The protocol conversion unit 115 receives the capability information from the copy/conversion instruction unit 117 and determines a protocol receivable by the mobile terminal 170. The protocol conversion unit 115 receives the file from the file conversion unit 114 and uses the determined protocol to output the file. In this exemplary embodiment, HTTP is used as the protocol. However, another known protocol such as RTP can be used, instead.

The packet transmission unit 116 receives the capability information from the copy/conversion instruction unit 117, receives the protocol and file format from the protocol conversion unit 115, and outputs HTTP/TCP/IP packets to the mobile network 140. In this exemplary embodiment, another packet format such as RTP/UDP/IP packets can be used, instead.

The above configuration according to the first exemplary embodiment uses the mobile network 140. However, with the same configuration, the first exemplary embodiment is applicable not only in a mobile packet network but also in different networks such as WiMax network and LTE network. In addition, the first exemplary embodiment is also applicable in a network using the Femtocell access point, without changing the configuration.

Besides MPEG-2, another known codec such as H.264 or WMV (Windows Multimedia Video) can be used as the codec used to compress and encode video contents. Besides MPEG-4, another known codec such as H.264 or WMV can be used as the converted codec in the transcoder unit 113.

Besides 3GPP, another known file format such as 3GPP2 or MP4 can be used as the converted file format in the file conversion unit 114.

Another known protocol such as RTP can be used as the converted protocol in the protocol conversion unit 115. In the above exemplary embodiment, content formed by compression-encoding a video signal is delivered. However, content formed by still image, audio signal, or the like can also be delivered with the same configuration.

Of course, processes/functions of the above units of the gateway 110 described with reference to Fig. 2 can be realized by a program executed on a computer forming the gateway 110.

### <Exemplary Embodiment 2>

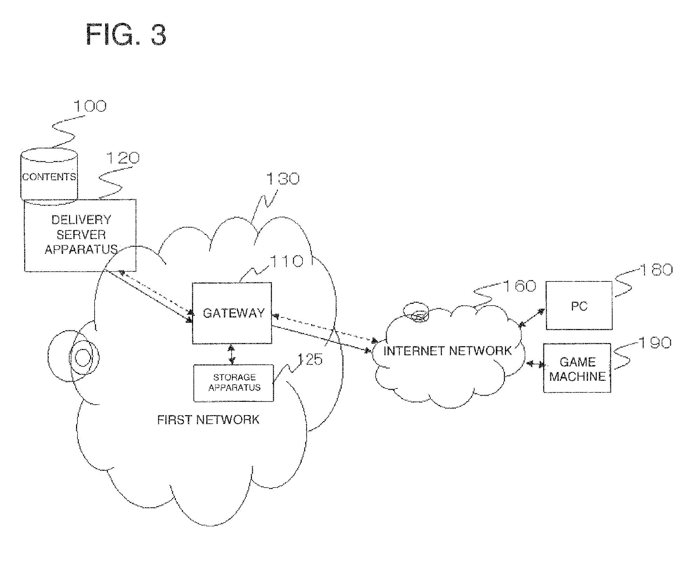

Fig. 3 is a block diagram illustrating a second embodiment of the present invention. In Fig. 3, components identical to those in Fig. 1 are denoted by identical reference numerals. Since these components identical between Figs. 1 and 3 operate in the same way, descriptions thereof will be omitted.

Fig. 3 illustrates a connection configuration in which terminals such as a personal computer 180 and a game machine 190 are connected, instead of the mobile terminal 170. The personal computer 180 and the game machine 190 use a certain protocol (for example, HTTP) to send a connection request signal to the gateway 110 via an Internet network 160. Since subsequent operations with the gateway 110 are the same as in the case of the mobile terminal 170, descriptions thereof will be omitted. Other than the game machine 190, a digital photo frame or the like can be used. In addition, a notebook PC, a game machine, or the like including a mobile data card can also be used.

### <Exemplary Embodiment 3>

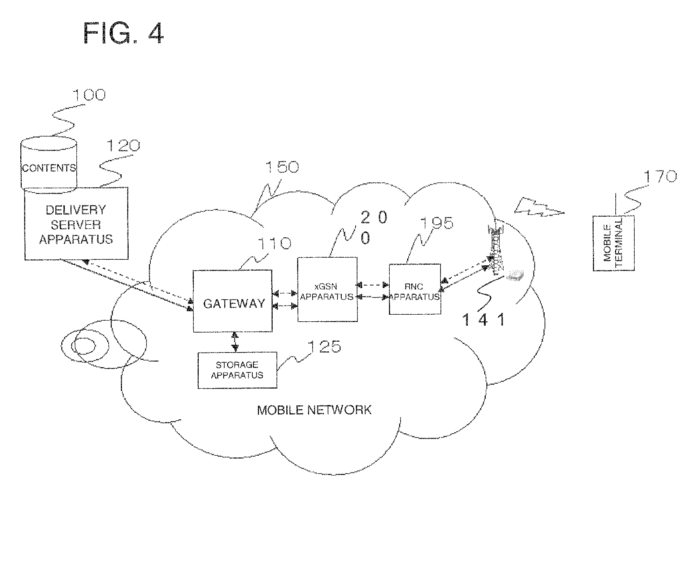

Fig. 4 is a block diagram illustrating a third embodiment of the present invention. In Fig. 4, components identical to those in Fig. 1 are denoted by identical reference numerals. Since these components identical between Figs. 1 and 4 operate in the same way, descriptions thereof will be omitted.

The present exemplary embodiment differs from the exemplary embodiment in Fig. 1 in the protocol used between the gateway 110 and an xGSN apparatus (packet forwarding apparatus) 200 (serving/gateway general packet radio service Support Node; a. node integrating SGSN (Serving General packet radio service Support Node) and GGSN (Gateway General packet radio service Support Node)) in a mobile network 150.

In this exemplary embodiment, GTP (GPRS Tunneling Protocol) is used as the protocol between the gateway 110 and the xGSN apparatus 200. The gateway 110 reads file format by using the GTP/UDP/IP protocol and outputs GTP/UDP/IP packets to the xGSN apparatus 200 on the mobile network 150.

The xGSN apparatus 200 receives the file of the GTP protocol, converts this file into the Iu-PS protocol, and outputs the converted file to an RNC (radio Network Controller) 195.

The RNC 195 converts the Iu-PS protocol into the TCP/IP protocol, selects a radio base station 141 in an area where the mobile terminal 170 exists, and outputs the packets to the mobile terminal 170 via the radio base station 141.

The mobile terminal 170 uses the TCP/IP protocol to receive the content file via the mobile network 150 and extracts a stream from the file to decode, reproduce, and display the contents.

Regarding the radio functions to communicate with the mobile terminal 170, besides W-CDMA and CDMA 2000, for example, the following techniques can be used:
HSDPA (High Speed Downlink Packet Access);
HSPA+ (High Speed Packet Access);
LTE (Long Term Evolution); and
WiMax.

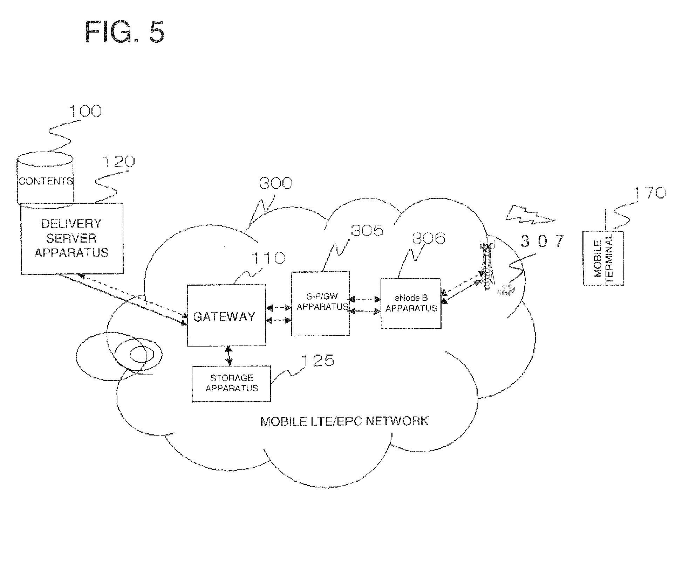

Fig. 5 illustrates a configuration of an example in which an LTE (Long Term Evolution)/EPC (Enhanced Packet Core) network is used as a mobile network. In Fig. 5, components identical to those in Fig. 1 are denoted by identical reference numerals. Since these components identical between Figs. 1 and 5 operate in the same way, descriptions thereof will be omitted.

In Fig. 5, in a mobile LTE/EPC network 300, an S-P (Serving-Packet Data)/GW (Gateway) apparatus 305 uses EPC techniques to execute packet transfer faster than conventional packet transfer.

An e-Node B (Enhanced-Node B) apparatus 306 uses LTE techniques to realize packet transmission faster than conventional packet transmission in a radio area.

In Fig. 5, GTP (GPRS Tunneling Protocol) is used as the protocol between the gateway 110 and the S-P/GW apparatus 305.

The gateway 110 reads file format by using the GTP/UDP/IP protocol and outputs GTP/UDP/IP packets to the S-P/GW apparatus 305 on the mobile network 300.

The S-P/GW apparatus 305 receives the file of the GTP protocol, converts the file into the 1u-PS protocol, and out puts the converted file to the e-Node B apparatus 306. The e-Node B apparatus 306 converts the 1u-PS protocol into the TCP/IP protocol and outputs the packets to the mobile terminal 170 via a radio base station 307.

The mobile terminal 170 uses the TCP/IP protocol to receive the content file via the mobile LTE/EPC network 300 and extracts a stream from the file to decode, reproduce, and display the contents.

As in the exemplary embodiment in Fig. 1, the following matters hold true for the exemplary embodiments in Figs. 3 to 5.

Besides MPEG-2, another known codec such as H.264 or WMV (Windows (registered trademark) Multimedia Video) can be used as the codec used to compress and encode video contents. Besides MPEG-4, another known codec such as H.264 or WMV can be used as the converted codec in the transcoder unit 113.

Besides 3GPP, another known file format such as 3GPP2 or MP4 can be used as the converted file format in the file conversion unit 114.

Another known protocol such as RTP can be used as the converted protocol in the protocol conversion unit 115. in the above exemplary embodiment, content formed by compression-encoding a video signal is delivered. However, content including a still image, an audio signal, or the like can also be delivered with the same configuration.

Meritorious effects of the above exemplary embodiments will be described.

According to the above exemplary embodiments, since the gateway automatically distinguishes various types of terminals (for example, mobile phones, PCs, game machines) and automatically executes conversion (conversion of bit rate, resolution, codec, frame rate, file format, protocol, etc.) suited to each terminal model on content, services for delivering the same content to various types of terminals can be realized, without remodeling the terminal.

In addition, according to the above exemplary embodiments, there is no need to execute conversion/processing to create content matching various types of terminals in advance. Namely, preparatory work for conversion/processing can be eliminated. In addition, according to the above exemplary embodiments, converted streams or files are stored in a storage apparatus or a memory, and when a request is sent from a terminal, the gateway searches the storage apparatus and determines whether to copy or convert a stream or file. In this way, in a large-scale delivery with an enormous number of requesting terminals, workload can be reduced and efficient delivery can be realized.

The entire disclosures of the above Patent Documents are incorporated herein by reference thereto. Modifications and adjustments of the exemplary embodiments and examples are possible within the scope of the overall disclosure (including the claims) of the present invention and based on the basic technical concept of the present invention. Various combinations and selections of various disclosed elements are possible within the scope of the claims of the present invention. That is, the present invention of course includes various variations and modifications that could be made by those skilled in the art according to the overall disclosure including the claims and the technical concept.

### EXPLANATIONS OF SYMBOLS

- 100: contents
- 110: gateway (conversion apparatus)
- 111: control signal transmission and reception unit
- 112: copy/reception unit
- 113: transcoder unit
- 114: file conversion unit
- 115: protocol conversion unit
- 116, 119: packet transmission unit
- 117: copy/conversion instruction unit
- 118: capability table
- 120: delivery server apparatus
- 125: storage apparatus
- 130: first network
- 140,150: mobile network
- 141: radio base station
- 160: second network (Internet network)
- 170: mobile terminal
- 180: personal computer
- 190: game machine
- 195: RNC apparatus
- 200: xGSN apparatus
- 300: mobile LTE/EPC network
- 305: S-P/GW apparatus
- 306: e-Node B apparatus
- 307: radio base station

## Claims

1. A delivery system comprising:
a gateway, wherein the gateway acquires, from a terminal via a network, model information of the terminal and information on content to be delivered to the terminal,
the gateway uses the acquired model information and the information on the content to check whether or not a file or stream that corresponds to the content and that has already been subjected to conversion corresponding to the terminal is stored in a storage apparatus,
in case it is found that the converted file or stream is stored in the storage apparatus, the gateway copies at least part of the converted file or stream and sends the at least part of the converted file or stream copied to the terminal via the network, and
in case it is found that the converted file or stream is not stored in the storage apparatus, the gateway requests a delivery server to send a file or stream of the content based on the information on the content, executes conversion corresponding to the terminal on the file or stream of the content acquired from the delivery server, based on the model information of the terminal, stores the converted file or stream in the storage apparatus, and sends the file or stream to the terminal via the network.

2. The delivery system according to claim 1, wherein the gateway converts at least one of codec, bit rate, screen resolution, frame rate, protocol, and file format.

3. The delivery system according to claim 1, wherein the terminal comprises at least one of a mobile phone, a personal computer, a game machine, and a digital photo frame.

4. The delivery system according to claim 1, wherein the network comprises at least one of an IP (Internet Protocol) network, a broadband network, an NGN (Next Generation Network) network, the Internet network, a W-LAN (Wireless-Local Area Network), a mobile packet network, a WiMax (World wide Interoperability for Microwave Access) network, and LTE ((Long Term Evolution).

5. The delivery system according to claim 1, wherein the gateway comprises:
a control signal transmission and reception unit that receives a request from the terminal;
a capability table in which is stored in advance capability information includes at least one of allowable codec, screen resolution, frame rate, receivable file format and file size, and reception protocol, in correspondence with terminal model information;
a copy/conversion instruction unit that reads, based on model information of a terminal, capability information corresponding to the terminal from the capability table and outputs a conversion instruction;
a copy/reception unit;
a file conversion unit;
a transcoder unit;
a protocol conversion unit;
a packet transmission unit; and
the storage apparatus comprising a storage apparatus or a memory that stores and holds content associated with terminal model information,
wherein, in response to a request from the terminal, the control signal transmission and reception unit accesses the storage apparatus, based on information on content accessed by the terminal and model information of the terminal,
the control signal transmission and reception unit checks whether or not a file or stream that corresponds to the content requested by the terminal and that has already been subjected to conversion suited to the model of the terminal is stored in the storage apparatus,
in case it is found that a converted file or stream corresponding to the content and the model of the terminal is stored in the storage apparatus, the control signal transmission and reception unit instructs the copy/conversion instruction unit to copy the content, instructs the storage apparatus to read out the file or stream that has already been subjected to conversion suited to the model of the terminal, and instructs the transcoder unit to bypass processing thereof,
the copy/reception unit receives a copy instruction from the copy/conversion instruction unit, copies a stream part of the file or stream read from the storage apparatus and outputs the stream part to the file conversion unit while bypassing the transcoder unit,
the file conversion unit receives capability information corresponding to the model of the terminal from the copy/conversion instruction unit and uses the stream sent from the copy/reception unit to create a file format receivable by the model of the terminal,
the protocol conversion unit receives capability information corresponding to the terminal from the copy/conversion instruction unit and creates a protocol receivable by the terminal, and
the packet transmission unit sends a packet of a protocol supplied from the protocol conversion unit to the network.

6. The delivery system according to claim 5, wherein, in case it is found that a converted file or stream corresponding to the content and the model of the terminal is not stored in the storage apparatus, the gateway requests the delivery server to send a file or stream of the content,
the delivery server apparatus reads a stream or file corresponding to the content selected by the terminal, sends the stream or file to the gateway, and sends capability information corresponding to the selected content to the gateway,
in the gateway, the control signal transmission and reception unit acquires the capability information corresponding to the content sent from the delivery server apparatus and outputs the capability information to the copy/conversion instruction unit,
the copy/conversion instruction unit receives the model information of the terminal from the control signal transmission and reception unit and capability information corresponding to the content from the delivery server apparatus and determines whether or not the content sent from the delivery server needs to be converted;
if it is determined that the content needs to be converted, the copy/conversion instruction unit creates conversion information for conversion between the information on the content and the capability information of the terminal, outputs the conversion information to the transcoder unit, and outputs the capability information of the terminal to the packet transmission unit, the file conversion unit, and the protocol conversion unit,
the copy/reception unit receives the file or stream of the content selected from the delivery server,
in case the file is received, the copy/reception unit extracts and outputs a stream stored in the file, and in case the stream is received, the copy/reception unit extracts and outputs a stream stored in a packet, and
the transcoder unit receives the stream extracted by the copy/reception unit, receives the conversion information from the copy/conversion instruction unit, executes the transcoding processing to convert the stream, and outputs the converted stream to the file conversion unit, wherein
the gateway further comprises
a transmission unit that receives the information on the content and the model information from the copy/conversion instruction unit, receives the converted stream from the transcoder unit, and outputs the information and stream to the storage apparatus in packet format.

7. A delivery method, by a gateway, comprising:
acquiring, from a terminal via a network, model information of the terminal and information on content to be delivered to the terminal;
using the acquired model information and the information on the content to check whether or not a file or stream that corresponds to the content and that has already been subjected to conversion corresponding to the terminal is stored in a storage apparatus;
copying, if it is found that the converted file or stream is stored in the storage apparatus, at least part of the converted file or stream and sending the file or stream to the terminal via the network; and
requesting, if it is found that the converted file or stream is not stored in the storage apparatus, a delivery server to send a file or stream of the content based on the information on the content, executing conversion corresponding to the terminal on the file or stream of the content acquired from the delivery server based on the model information of the terminal, storing the converted file or stream in the storage apparatus, and sending the file or stream to the terminal via the network.

8. The delivery method according to claim 7, comprising
the gateway converting at least one of codec, bit rate, screen resolution, frame rate, protocol, file format and the like.

9. The delivery method according to claim 7, wherein the terminal comprises at least one of a mobile phone, a personal computer, a game machine, and a digital photo frame.

10. The delivery method according to claim 7, wherein the network comprises at least one of an IP network, a broadband network, an NGN network, an Internet network, a W-LAN, a mobile packet network, a WiMax network, and an LTE network.

11. A gateway apparatus comprising:
a conversion unit, wherein the conversion unit acquires, from a terminal via a network, at least model information of the terminal or information on content to be delivered to the terminal,
the conversion unit uses the acquired model information and the information on the content to check whether or not a file or stream that corresponds to the content and that has already been subjected to conversion corresponding to the terminal is stored in a storage apparatus,
in case it is found that the converted file or stream is stored in the storage apparatus, the conversion unit copies at least part of the converted file or stream and sends the at least part of the converted file or stream copied to the terminal via the network, and
in case it is found that the converted file or stream is not stored in the storage apparatus, the conversion unit requests a delivery server to send a file or stream of the content based on the information on the content, executes conversion corresponding to the terminal on the file or stream of the content acquired from the delivery server, based on the model information of the terminal, stores the converted file or stream in the storage apparatus, and sends the file or stream to the terminal via the network.

12. The gateway apparatus according to claim 11, comprising:
a control signal transmission and reception unit that receives a request from the terminal;
a capability table in which is stored in advance capability information includes at least one of allowable codec, screen resolution, frame rate, receivable file format and file size, and reception protocol, in correspondence with terminal model information;
a copy/conversion instruction unit that reads, based on model information of a terminal, capability information corresponding to the terminal from the capability table and outputs a conversion instruction;
a copy/reception unit;
a file conversion unit;
a transcoder unit;
a protocol conversion unit;
a packet transmission unit; and
the storage apparatus comprising a storage apparatus or a memory that stores and holds content associated with terminal model information,
wherein, in response to a request from the terminal, the control signal transmission and reception unit accesses the storage apparatus, based on information on content accessed by the terminal and model information of the terminal,
the control signal transmission and reception unit checks whether or not a file or stream that corresponds to the content requested by the terminal and that has already been subjected to conversion suited to the model of the terminal is stored in the storage apparatus,
in case it is found that a converted file or stream corresponding to the content and the model of the terminal is stored in the storage apparatus, the control signal transmission and reception unit instructs the copy/conversion instruction unit to copy the content, instructs the storage apparatus to read out the file or stream that has already been subjected to conversion suited to the model of the terminal, and instructs the transcoder unit to bypass processing thereof,
the copy/reception unit receives a copy instruction from the copy/conversion instruction unit, copies a stream part of the file or stream read from the storage apparatus and outputs the stream part to the file conversion unit while bypassing the transcoder unit,
the file conversion unit receives capability information corresponding to the model of the terminal from the copy/conversion instruction unit and uses the stream sent from the copy/reception unit to create a file format receivable by the model of the terminal,
the protocol conversion unit receives capability information corresponding to the terminal from the copy/conversion instruction unit and creates a protocol receivable by the terminal, and
the packet transmission unit sends a packet of a protocol supplied from the protocol conversion unit to the network.

13. The gateway apparatus according to claim 12, wherein in case a converted file or stream corresponding to the content and the model of the terminal is not stored in the storage apparatus, the gateway apparatus requests the delivery server to send a file or stream of the content,
the delivery server apparatus reads a stream or file corresponding to the content selected by the terminal, sends the stream or file to the gateway apparatus, and sends capability information corresponding to the selected content to the gateway apparatus,
the control signal transmission and reception unit acquires the capability information corresponding to the content sent from the delivery server apparatus and outputs the capability information to the copy/conversion instruction unit,
the copy/conversion instruction unit receives the model information of the terminal from the control signal transmission and reception unit and capability information corresponding to the content from the delivery server apparatus and determines whether or not the content sent from the delivery server needs to be converted,
if it is determined that the content needs to be converted, the copy/conversion instruction unit creates conversion information for conversion between the information on the content and the capability information of the terminal, outputs the conversion information to the transcoder unit, and outputs the capability information of the terminal to the packet transmission unit, the file conversion unit, and the protocol conversion unit,
the copy/reception unit receives the file or stream of the content selected from the delivery server,
in case the file is received, the copy/reception unit extracts and outputs a stream stored in the file, and in case the stream is received, the copy/reception unit extracts and outputs a stream stored in a packet,
the transcoder unit receives the stream extracted by the copy/reception unit, receives the conversion information from the copy/conversion instruction unit, executes the transcoder process to convert the stream, and outputs the converted stream to the file conversion unit, and
the gateway further comprises
a transmission unit receiving the information on the content and the model information from the copy/conversion instruction unit, receiving the converted stream from the transcoder unit, and outputting the information and stream to the storage apparatus in packet format,

14. The gateway apparatus according to claim 11, wherein the conversion unit executes conversion of at least one of codec, bit rate, screen resolution, frame rate, protocol, file format, and the like on a file or stream of the content.

15. The gateway apparatus according to claim 11, wherein the terminal comprises at least one of a mobile phone, a personal computer, a game machine, and a digital photo frame.

16. The gateway apparatus according to claim 11, wherein the network comprises at least one of an IP network, a broadband network, an NGN network, an Internet network, a LAY, a mobile packet network, a. WiMax network, and an LTE network.

17. The gateway apparatus according to claim 11, wherein the storage apparatus comprises a storage apparatus comprising a hard disk apparatus and/or a cache memory.

18. A program causing a computer forming a gateway to execute the processing comprising:
acquiring, from a terminal via a network, model information of the terminal and information on content to be delivered to the terminal;
using the acquired model information and the information on the content to check whether or not a file or stream that corresponds to the content and that has already been subjected to conversion corresponding to the terminal is stored in a storage apparatus;
copying, if it is found that the converted file or stream is stored in the storage apparatus, at least part of the converted file or stream and sending the at least part of file or stream copied to the terminal via the network; and
requesting, if it is found that the converted file or stream is not stored in the storage apparatus, a delivery server to send a file or stream of the content based on the information on the content, executing conversion corresponding to the terminal on the file or stream of the content acquired from the delivery server based on the model information of the terminal, accumulating the converted file or stream in the storage apparatus, and sending the file or stream to the terminal via the network.

19. The program according to claim 18, causing a computer to execute:
a control signal transmission and reception processing that receives a request from the terminal;
a capability table storing in advance capability information that corresponds to terminal model information and that includes at least one of an allowable codec, a screen resolution, a frame rate, a receivable file format and file size, and a reception protocol;
a copy/conversion instruction processing that reads, based on model information of a terminal, capability information corresponding to the terminal from the capability table and outputs conversion instructions;
a copy/reception processing;
a file conversion processing;
a transcoder processing;
a protocol conversion processing;
a packet transmission process; and
the storage apparatus comprising a storage apparatus or a memory storing and holding content associated with terminal model information;
wherein, in response to a request from the terminal, the control signal transmission and reception process accesses the storage apparatus comprising a storage apparatus or a memory storing and holding content associated with terminal model information, based on information on content accessed by the terminal and model information of the terminal;
the control signal transmission and reception processing determines whether or not a file or stream that corresponds to the content requested by the terminal and that has already been subjected to conversion suited to the model of the terminal is stored in the storage apparatus;
if a converted file or stream corresponding to the content and the model of the terminal is stored in the storage apparatus, the control signal transmission and reception processing instructs the copy/conversion instruction processing to copy the content, instructs the storage apparatus to read out the file or stream that has already been subjected to conversion suited to the model of the terminal, and instructs the transcoder unit to bypass processing thereof;
when receiving a copy instruction from the copy/conversion instruction process, the copy/reception processing copies a stream part of the file or stream read from the storage apparatus and outputs the stream part to the file conversion processing while bypassing the transcoder process;
the file conversion processing receives capability information corresponding to the model of the terminal from the copy/conversion instruction processing and uses the stream sent from the copy/reception processing to create a file format receivable by the model of the terminal;
the protocol conversion processing receives capability information corresponding to the terminal from the copy/conversion instruction processing and creates a protocol receivable by the terminal; and
the packet transmission processing sends a packet of a protocol supplied from the protocol conversion processing to the network.

20. The program according to claim 19, causing the computer to execute:
the control signal transmission and reception processing that requests, if a converted file or stream corresponding to the content and the type is not stored in the storage apparatus, the delivery server to send a file or stream of the content, extracting capability information corresponding to the selected content sent from the delivery server apparatus, and outputting the capability information to the copy/conversion instruction processing;
the copy/conversion instruction processing that receives model information of the terminal from the control signal transmission and reception processing and capability information corresponding to the content from the delivery server apparatus, determines whether or not the content sent from the delivery server needs to be converted, creates, if the content needs to be converted, conversion information for conversion between the information on the content and the capability information of the terminal, outputting the conversion information to the transcoder process, and outputs the capability information of the terminal to the packet transmission process, the file conversion processing, and the protocol conversion process;
the copy/reception processing that receives the file or stream of the content selected from the delivery server, extracts and outputs, if the file is received, a stream stored in the file, and extracts and outputs, if the stream is received, a stream stored in a packet;
the transcoder processing that receives the stream extracted by the copy/reception processing, receives the conversion information from the copy/conversion instruction processing, executes a transcoder processing to convert the stream, and outputs the converted stream to the file conversion process; and
the packet transmission processing that receives the information on the content and the model information from the copy/conversion instruction processing, receives the converted stream from the transcoder processing, and outputs the information and stream to the storage apparatus in packet format.

21. The program according to claim 18, wherein the conversion is executed on at least one of codec, bit rate, screen resolution, frame rate, protocol, file format, and the like.

22. The program according to claim 18, wherein the terminal comprises at least one of a mobile phone, a personal computer, a game machine, and a digital photo frame.

23. The program according to claim 18, wherein the network comprises at least one of an IP network, a broadband network, an NGN network, an Internet network, a W-LAN, a mobile packet network, a WiMax network, and an LTE network.
